# FASCICULE DE BREVET EUROPEEN

(11) **EP 1 287 327 B1**
(45) Date de publication et mention de la délivrance du brevet: **18.10.2006**
(21) Numéro de dépôt: 01915458.2
(22) Date de dépôt: 09.03.2001
(51) Int. Cl.: G01N 1/28

(54) **AUTOMATE POUR L'ANALYSE BIOLOGIQUE**
AUTOMATISIERTE VORRICHTUNG ZUR BIOLOGISCHEN ANALYSE
AUTOMATON FOR BIOLOGICAL ANALYSIS

(30) Priorité: 09.03.2000 FR 0003137
(43) Date de publication de la demande: 05.03.2003
(73) Titulaire: Genomic S.A., 74165 Collonges-sous-Salève Cedex (FR)
(72) Inventeur: GAZEAU, Michel, F-74160 Saint-Julien-en-Genevois (FR)
(74) Mandataire: Breese, Pierre
(86) Numéro de dépôt international: PCT/FR2001/000714
(87) Numéro de publication internationale: WO 2001/067112

(56) Documents cités:
- EP-A- 0 047 189
- EP-A- 0 947 819
- EP-A- 0 984 263
- US-A- 4 314 523
- US-A- 4 468 410
- US-A- 4 853 188
- US-A- 5 589 400

## Description

Les biopuces permettent d'analyser en parallèle un très grand nombre de molécules. Il s'agit essentiellement d'acides nucléiques et de protéines.

Le principe de base est la reconnaissance et l'appariement de deux molécules, qui présentent des affinités.

L'une des collections de molécules est fixée, sous forme de mini ou micro-dépôts, sur un support solide, tissu, lame de verre, puce de silicium ... L'autre molécule, qui est marquée, en général en solution, est mise en contact avec les échantillons déposés sur le support solide. Après un temps d'incubation, l'excès de molécule marquée est éliminé et le support est soigneusement lavé. Il s'agit alors de détecter et quantifier le signal émis par les molécules retenues sur les dépôts. Dans certains cas, la molécule retenue peut être « décrochée » des dépôts et une nouvelle molécule peut être testée avec le même support solide.

D'une façon générale, pour traiter les biopuces, il faut mettre les dépôts en contact avec différents réactifs puis les laver soigneusement. Il faut adapter la température des réactifs et des biopuces. Les marqueurs sont le plus souvent fluorescents, mais d'autres techniques de marquage peuvent être utilisées.

La molécule marquée est un élément rare et/ou coûteux. Il convient de minimiser le volume nécessaire. Les autres réactifs, et en particulier les produits de lavage, sont peu onéreux et la réduction des volumes utilisés est beaucoup moins importante.

EP947819 décrit un automate de traitement de biopuces pour l'analyse biologique constitué par une centrifugeuse comportant un rotor supportant un réacteur L' étalement a lieu par mouvement centrifuge du liquide déposé sur une biopuce horizontale. D'autres automates centrifuges tels que US5589400 ou US4853188 déposent des liquides sur la surface de lames de microscopes placées verticalement à l'extrémité des rayons d'un rotor. Par ailleurs l'utilisation d' une lamelle mobile pour étaler un liquide sur une lame pour l'analyse biologique est connue, par exemple par EP047189.

### L'invention

Il s'agit d'un automate tel qui défini par les revendications 1 à 13 capable de réaliser sans intervention humaine le traitement des biopuces et l'acquisition des signaux en vue de leur analyse. Outre des économies de réactifs, l'automate permet de traiter un grand nombre de biopuces. Sa simplicité en fait un équipement relativement peu coûteux.

Le coeur de l'appareil est une centrifugeuse basse vitesse dont la position angulaire du rotor peut être fixée de façon précise, grâce à un codeur par exemple.

Le rotor, amovible ou non, est constitué d'un moyeu sur lequel sont fixés des rayons. Chaque rayon porte à son extrémité un réacteur qui sera décrit plus loin.

Le couvercle de la centrifugeuse comporte différents éléments :

Un nombre de buses fixes régulièrement espacées, égales au nombre de réacteurs du rotor et situées sur une circonférence dont le rayon est égal à celui du centre des réacteurs, de façon à dispenser du liquide dans ces derniers. Ces buses sont reliées par des cathéters calibrés au couvercle d'une enceinte hermétique qui comporte un nombre de tubes contenant les molécules marquées. Cette enceinte peut être mise sous une pression, donnée pendant un temps donné, grâce à une bombonne de gaz, par exemple, ce qui a pour effet de refouler par les cathéters vers les réacteurs un même volume des liquides contenus dans les tubes. Cette enceinte peut être refroidie par un procédé quelconque pour assurer une bonne conservation des molécules marquées.

Un nombre de buses fixées sur le couvercle entre les précédentes, reliées à des flacons sous pression, ou en dépression, ou à des pompes, permet de distribuer successivement dans chaque réacteur les réactifs communs, en grand volume (quelques millilitres). Certaines de ces buses peuvent projeter des liquides pour le nettoyage et la décontamination de l'appareil.

Un dispositif mécanique de translation sur un rayon permet de tirer à la périphérie, puis de ramener à sa position initiale une pièce coulissante porte biopuces de chaque réacteur ou dans d'autres cas les réacteurs eux-mêmes, successivement. Ce dispositif peut être constitué d'une crémaillère guidée, entraînée par un pignon solidaire d'un arbre de moteur électrique fixe. Un doigt placé à la partie située le plus près du centre de l'élément mobile peut descendre dans la centrifugeuse et remonter grâce à une came, par exemple. Ce doigt permet au dispositif de translation d'accrocher la pièce coulissante ou le réacteur.

L'enveloppe de la centrifugeuse comporte une fente qui peut être obturée par une pièce solidaire du dispositif mécanique de translation et qui laisse passer la pièce coulissante porte biopuces ou le réacteur. Ces derniers sont ainsi placés dans le champ du système d'acquisition du signal.

L'enveloppe de la centrifugeuse peut être dotée d'une ou plusieurs buses horizontales télescopiques permettant soit d'injecter du réactif dans chaque réacteur, soit d'aspirer les réactifs qu'il contient.

La forme du fonds de l'enceinte de la centrifugeuse est étudiée pour permettre l'évacuation complète des réactifs utilisés.

La température à l'intérieur de la centrifugeuse est régulée. La rotation à très faible vitesse des réacteurs améliore l'uniformisation de la température. Le cas échéant, l'hygrométrie de l'air dans l'enceinte peut être contrôlée.

Le fonds de la centrifugeuse et/ou l'intérieur du couvercle peuvent être dotés d'un élément circulaire de forme adaptée pour provoquer des mouvements de parties de réacteurs.

On comprendra mieux l'invention à l'aide de la description, faite ci-après à titre purement explicatif, d'un mode de réalisation de l'invention, en référence aux figures annexées :
- les figures 1, 2 et 3 illustrent respectivement une vue de face, une vue de côté et une vue de dessus du réacteur ;
- la figure 4 illustre une vue de dessus de la centrifugeuse ;
- les figures 5 et 6 illustrent respectivement une vue de côté et une vue de face du dispositif porteur à valve centripète ;
- les figures 7, 8 et 9 illustrent respectivement une vue de côté, une vue de face et une vue de dessus du dispositif porteur à drainage centrifuge ;
- les figures 10 et 11 illustrent respectivement une vue de côté et une vue de face du dispositif porteur capillaire.

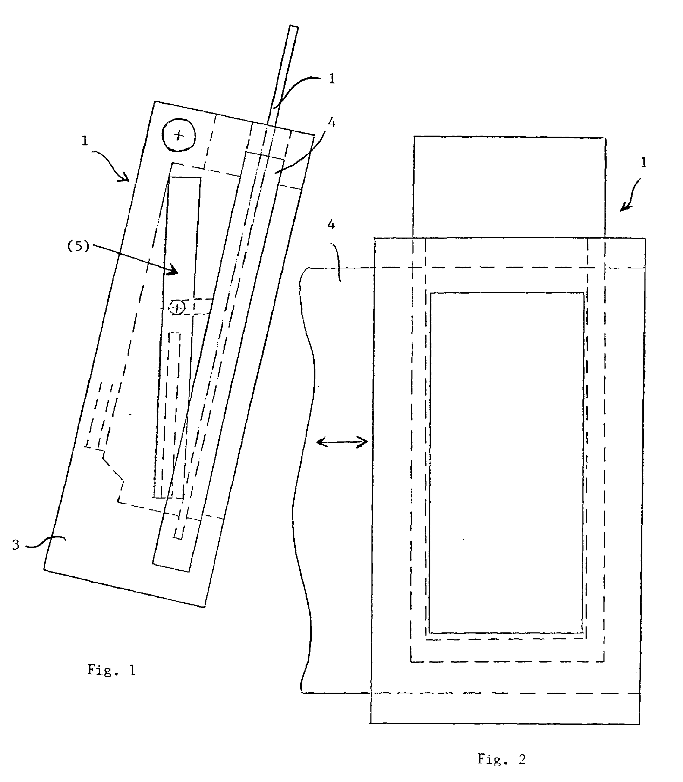

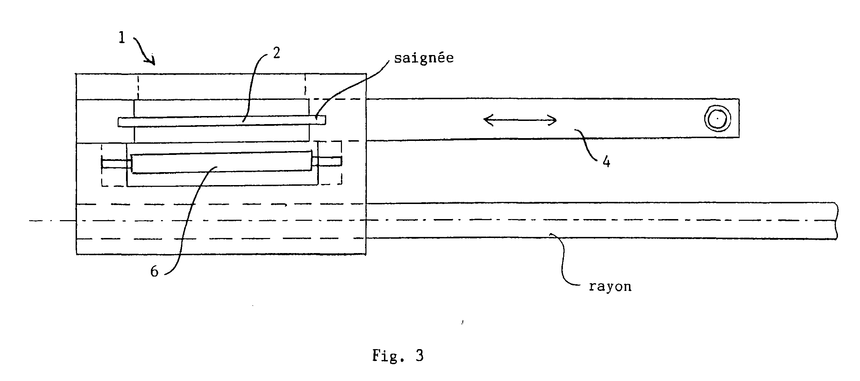

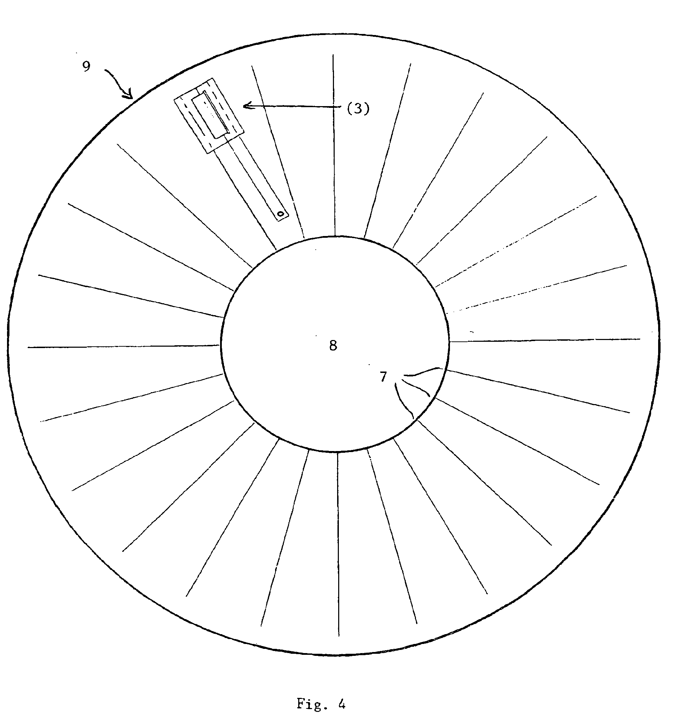

Les réacteurs (1) illustrés figures 1 à 3, fixés à l'extrémité des rayons (7) du rotor (8) de la centrifugeuse (9) illustrée figure 4 sont inclinés par rapport à la verticale passant par le rayon, dans un plan passant par ce rayon.

Ils sont constitués de trois éléments :

Le corps (3) du réacteur qui est traversé par le rayon (7) du rotor (8). Il comporte sur l'une de ses deux grandes faces un guidage. Il peut, à la partie inférieure de la face extérieure, comporter un orifice obturé par un bouchon pesant appliqué à l'aide d'un ressort et qui grâce à la force centripète s'écarte de la surface et libère l'orifice. Il peut aussi sur la même face comporter un autre orifice obturé par un bouchon de l'intérieur, maintenu en appui par un ressort. En appliquant une buse télescopique sur cet orifice, il est possible d'injecter un liquide sous pression dans le réacteur.

Une pièce coulissante (4) porte biopuces (2) qui lorsqu'elle est munie de la biopuce et engagée à fonds dans son guidage, obture l'une des deux grandes faces du réacteur. Le porte biopuces peut être déplacé d'un ou deux millimètres dans son guidage, sans nuire à l'étanchéité du réacteur, pour améliorer le contact des dépôts avec les réactifs. Il peut être éloigné de sa position d'origine vers l'extérieur de six ou sept millimètres pour ouvrir le réacteur et permettre l'écoulement de son contenu. Il peut enfin être éloigné de sa position d'origine de quelques centimètres pour sortir de l'enceinte de la centrifugeuse et se placer dans le champ du système d'acquisition du signal. C'est le dispositif mécanique de translation évoqué plus haut qui actionne les porte biopuces ou dans d'autres cas les réacteurs.

Un agitateur (5) composé d'une lamelle (6) qui peut soit prendre appui sur la partie inférieure de la biopuce (2) formant un angle solide qui retient un faible volume de liquide, soit à partir de cette position venir s'appliquer sur la biopuce « étalant » sur sa surface et sans bulle d'air le volume de liquide retenu, soit entrer complètement dans le corps du réacteur pour permettre le coulissement du porte biopuces.

Le passage continu entre ces trois positions provoque la projection du liquide de lavage sur la surface active de la biopuce.

La rotation des réacteurs (1) à faible vitesse provoque l'accumulation du liquide contenu vers l'extérieur. L'arrêt de cette rotation annule cette accumulation et crée un reflux du liquide vers le rotor (8). La succession de mises en rotation et d'arrêts agite le liquide et accélère le lavage des biopuces.

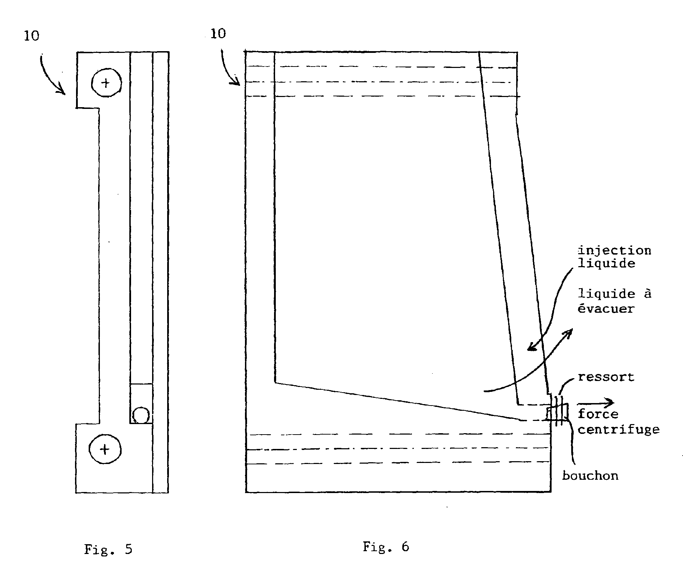

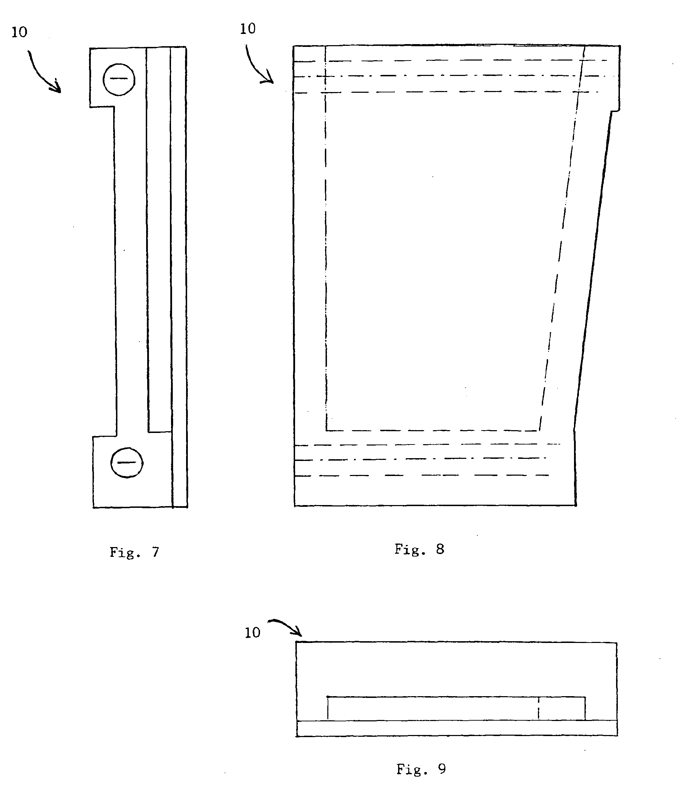

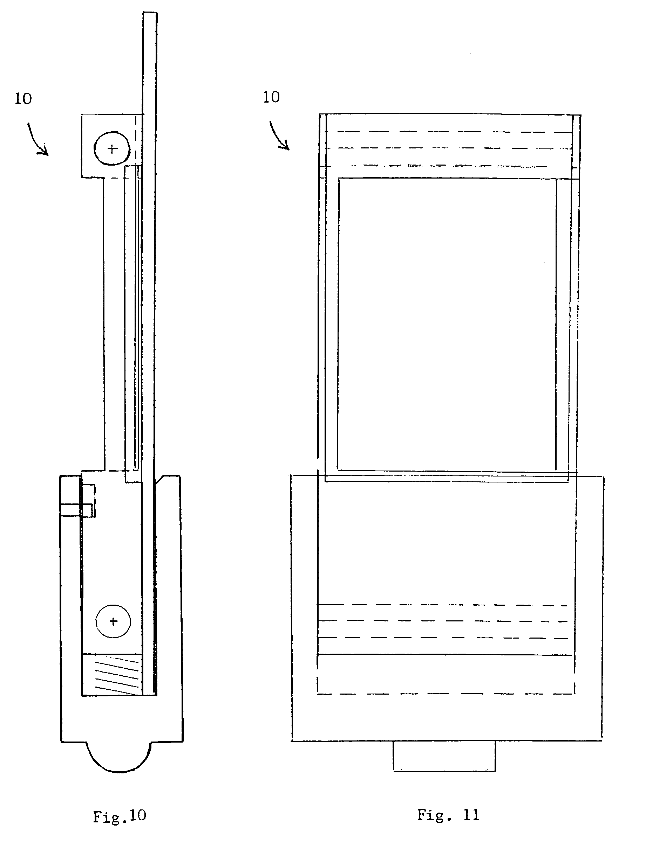

D'autres types de réacteurs peuvent être conçus, comme par exemple les trois versions de dispositifs porteurs (10) présentés dans les figures 5 et 6, 7 à 9 et 10 et 11. Ils sont plus simples et moins coûteux à réaliser, mais ne permettent pas d'approcher la surface active de la biopuce de très près pour l'acquisition du signal. Dans ce cas, c'est le réacteur tout entier qui est poussé à l'extérieur de l'enceinte de la centrifugeuse.

## Revendications

1. Automate de traitement de biopuces pour l'analyse biologique constitué par une centrifugeuse (9) comportant un rotor (8) lequel supporte au moins un réacteur (1) présentant un corps (3) et comportant un porte biopuces (2), **caractérisé en ce que** ledit réacteur (1) comporte en outre un agitateur (5) composé d'une lamelle (6), ladite lamelle pouvant prendre trois positions, une première position consistant à prendre appui sur la partie inférieure de la biopuce (2) formant un angle solide qui retient un faible volume de liquide, une seconde position consistant à venir s'appliquer, depuis la première position, sur la biopuce (2), « étalant » sur sa surface et sans bulle d'air le volume de liquide retenu, et une troisième position consistant à entrer complètement dans le corps du réacteur (1).

2. Automate de traitement de biopuces pour l'analyse biologique selon la revendication 1, **caractérisé en ce que** le passage dudit agitateur entre les trois positions est continu.

3. Automate pour l'analyse biologique selon la revendication 1 ou 2, **caractérisé en ce que** les réacteurs sont fixés à l'extrémité des rayons (7) du rotor (8) de la centrifugeuse (9) et sont inclinés par rapport à la verticale passant par le rayon (7), dans un plan passant par ce rayon (7).

4. Automate pour l'analyse biologique selon l'une quelconque des revendications 1 à 3, **caractérisé en ce que** les réacteurs comportent un corps (3) présentant sur l'une de ses deux grandes faces un guidage, et à sa partie inférieure de la face extérieure, un orifice obturé par un bouchon pesant appliqué à l'aide d'un ressort et qui, grâce à la force centripète, s'écarte de la surface et libère l'orifice.

5. Automate pour l'analyse biologique selon la revendication 4, **caractérisé en ce que** la face munie dudit bouchon comporte un autre orifice obturé par un bouchon de l'intérieur, maintenu en appui par un ressort pour permettre d'injecter un liquide sous pression dans le réacteur.

6. Automate pour l'analyse biologique selon la revendication 4 ou 5, **caractérisé en ce que** le réacteur présente une pièce coulissante (4) porte biopuces (2) qui, lorsqu'elle est munie de la biopuce et engagée à fond dans ledit guidage, obture l'une des deux grandes faces du réacteur.

7. Automate pour l'analyse biologique selon l'une quelconque des revendications 1 à 6, **caractérisé en ce que** le rotor (8) est entraîné selon des cycles alternant la mise en rotation et d'arrêt pour créer un reflux du liquide vers le rotor (8).

8. Automate pour l'analyse biologique selon l'une quelconque des revendications 1 à 7, **caractérisé en ce qu'**il comporte une centrifugeuse munie d'un couvercle muni de buses fixes régulièrement espacées, égales au nombre de réacteurs (1) du rotor (8) et situées sur une circonférence dont le rayon est égal à celui du centre des réacteurs (1).

9. Automate pour l'analyse biologique selon la revendication 8, **caractérisé en ce que** les buses sont reliées par des cathéters calibrés au couvercle d'une enceinte hermétique qui comporte un nombre de tubes contenant les molécules marquées et des moyens de mise sous pression.

10. Automate pour l'analyse biologique selon la revendication 8 ou 9, **caractérisé en ce que** le couvercle comporte en outre des buses reliées à des flacons pour la distribution dans chaque réacteur des réactifs.

11. Automate pour l'analyse biologique selon l'une quelconque des revendications 8 à 10, **caractérisé en ce que** le couvercle comporte en outre des buses reliées à des flacons pour la projection de liquides pour le nettoyage et la décontamination de l'appareil.

12. Automate pour l'analyse biologique selon la revendication 6, **caractérisé en ce qu'**il comporte en outre un dispositif mécanique de translation permettant de tirer à la périphérie puis de ramener à sa position initiale ladite pièce coulissante (4) porte biopuces (2).

13. Automate pour l'analyse biologique selon la revendication 6 ou la revendication 12, **caractérisé en ce qu'**il comporte en outre un dispositif mécanique de translation permettant de tirer à la périphérie puis de ramener à sa position initiale ledit réacteur (1).

## Claims

1. Automated biochip-processing device for performing biological analysis, said automatic logic controller being constituted by a centrifuge (9) comprising a rotor (8) which supports at least one reactor (1) presenting a body (3) and including a biochip holder for holding biochips (2), said biochip-processing automatic logic controller being **characterized in that** said reactor (1) further includes an agitator (5) constituted of a blade (6), it being possible for said blade to take up three positions, namely a first position consisting in it bearing against the bottom portion of the biochip (2) forming a solid angle which retains a small volume of liquid, a second position consisting in coming, from the first position, to apply itself against the biochip (2), "spreading" the retained volume of liquid over its surface and with no air bubbles, and a third position consisting in it coming completely into the body of the reactor (1).

2. Automated biochip-processing device for performing biological analysis according to claim 1, **characterized in that** said agitator goes between the three positions in continuous manner.

3. Automated biochip-processing device for performing biological analysis according to claim 1 or claim 2, **characterized in that** the reactors are fastened to the ends of the spokes (7) of the rotor (8) of the centrifuge (9), and they are inclined relative to the vertical passing through the spoke (7), in a plane containing the spoke (7).

4. Automated biochip-processing device for performing biological analysis according to any one of claims 1 to 3, **characterized in that** each of the reactors has a body (3) presenting guide means on one of its two large faces, and an orifice in the bottom portion of its outside face, said orifice being closed off by a weigh cap applied by means of a spring and that, by means of the centripetal force, moves away from the surface and opens up the orifice.

5. Automated biochip-processing device for performing biological analysis according to claim 4, **characterized in that** the face provided with said cap is provided with another orifice closed off by a cap from the inside, which cap is held in abutment by a spring in order to enable a pressurized liquid to be injected into the reactor.

6. Automated biochip-processing device for performing biological analysis according to claim 4 or claim 5, **characterized in that** the reactor presents a slidably mounted biochip holder piece (4) for holding biochips (2), which piece, when it is provided with the biochip and is engaged fully into said guide means, closes off one of the two large faces of the reactor.

7. Automated biochip-processing device for performing biological analysis according to any one of claims 1 to 6, **characterized in that** the rotor (8) is driven in cycles that alternate rotating with stopping in order to generate backflow of liquid towards the rotor (8).

8. Automated biochip-processing device for performing biological analysis according to any one of claims 1 to 7, **characterized in that** it comprises a centrifuge equipped with a lid provided with fixed nozzles that are uniformly spaced apart, the number of which nozzles being equal to the number of reactors (1) of the rotor (8), said nozzles being situated on a circumference whose radius is equal to the radius from the center of the reactors (1).

9. Automated biochip-processing device for performing biological analysis according to claim 8, **characterized in that** the nozzles are connected via calibrated catheters to the lid of an airtight enclosure that has a number of tubes containing the marked molecules and pressurization means.

10. Automated biochip-processing device for performing biological analysis according to claim 8 or claim 9, **characterized in that** the lid is further provided with nozzles connected to flasks for the purpose of distributing reagents into each reactor.

11. Automated biochip-processing device for performing biological analysis according to any one of claims 8 to 10, **characterized in that** the lid is further provided with nozzles connected to flasks for the purpose of spraying liquids for cleaning and decontaminating the apparatus.

12. Automated biochip-processing device for performing biological analysis according to claim 6, **characterized in that** it further comprises a mechanical device for imparting movement in translation, making it possible to pull said slidably mounted piece (4) for holding biochips (2) to the periphery and then to return it to its initial position.

13. Automated biochip-processing device for performing biological analysis according to claim 6 or claim 12, **characterized in that** it further comprises a mechanical device for imparting movement in translation, making it possible to pull said reactor (1) to the periphery and then to return it to its initial position.

## Patentansprüche

1. Biochip-Bearbeitungsautomat für die biologische Analyse, bestehend aus einer Zentrifuge (9) mit einem Rotor (8), der mindestens einen einen Körper (3) aufweisenden Reaktor (1) stützt, und einem Biochip-Träger (2), **dadurch gekennzeichnet, dass** der Reaktor (1) ferner ein aus einer Lamelle (6) bestehendes Rührwerk (5) umfasst, wobei die Lamelle drei Positionen einnehmen kann, eine erste Position, in der sie sich auf das untere Teil des Biochips (2) abstützt und einen Raumwinkel bildet, der ein geringes Flüssigkeitsvolumen zurückhält, eine zweite Position, in der sie sich ab der ersten Position auf den Biochip (2) abstützt und das zurückgehaltene Flüssigkeitsvolumen ohne Luftblase auf dessen Oberfläche "verteilt", und eine dritte Position, in der sie komplett in den Körper des Reaktors (1) eintritt.

2. Biochip-Bearbeitungsautomat für die biologische Analyse nach Anspruch 1, **dadurch gekennzeichnet, dass** der Übergang des Rührwerks zwischen den drei Positionen kontinuierlich erfolgt.

3. Automat für die biologische Analyse nach Anspruch 1 oder 2, **dadurch gekennzeichnet, dass** die Reaktoren am Ende der Radien (7) des Rotors (8) der Zentrifuge (9) befestigt und in Bezug auf die durch den Radius (7) verlaufende Vertikale in einer durch diesen Radius (7) verlaufenden Ebene geneigt sind.

4. Automat für die biologische Analyse nach einem der Ansprüche 1 bis 3, **dadurch gekennzeichnet, dass** die Reaktoren einen Körper (3) umfassen, der an einer seiner beiden großen Führungsflächen und an seinem unteren Teil der Außenfläche eine Öffnung aufweist, die mit einem schweren, anhand einer Feder beaufschlagten Stopfen verschlossen ist, der sich dank der zentripetalen Kraft von der Oberfläche entfernt und die Öffnung freigibt.

5. Automat für die biologische Analyse nach Anspruch 4, **dadurch gekennzeichnet, dass** die mit dem Stopfen versehene Fläche eine weitere Öffnung aufweist, die von innen durch einen Stopfen verschlossen ist, der von einer Feder festgehalten wird, um die Einspritzung einer unter Druck stehenden Flüssigkeit in den Reaktor zu ermöglichen.

6. Automat für die biologische Analyse nach Anspruch 4 oder 5, **dadurch gekennzeichnet, dass** der Reaktor ein Biochips (2) tragendes Gleitstück (4) aufweist, das eine der beiden großen Flächen des Reaktors verschließt, wenn es mit dem Biochip bestückt und bis zum Anschlag in die Führung eingeführt ist.

7. Automat für die biologische Analyse nach einem der Ansprüche 1 bis 6, **dadurch gekennzeichnet, dass** der Rotor (8) gemäß abwechselnden Drehungs- und Stoppzyklen angetrieben wird, um einen Rückfluss der Flüssigkeit zum Rotor (8) zu bewirken.

8. Automat für die biologische Analyse nach einem der Ansprüche 1 bis 7, **dadurch gekennzeichnet, dass** er eine Zentrifuge mit einem Deckel umfasst, der in regelmäßigen Abständen angeordnete ortsfeste Düsen aufweist, deren Anzahl derjenigen der Reaktoren (1) des Rotors (8) entspricht und sich über einem Umfang befinden, dessen Radius gleich demjenigen des Zentrums der Reaktoren (1) ist.

9. Automat für die biologische Analyse nach Anspruch 8, **dadurch gekennzeichnet, dass** die Düsen über kalibrierte Katheter mit dem Deckel eines hermetischen Behälters verbunden sind, der eine Anzahl von die markierten Moleküle enthaltenden Rohren sowie Unterdrucksetzungsmittel umfasst.

10. Automat für die biologische Analyse nach Anspruch 8 oder 9, **dadurch gekennzeichnet, dass** der Deckel ferner Düsen umfasst, die an Flakons für die Verteilung der Reaktionsmittel in jeden Reaktor angeschlossen sind.

11. Automat für die biologische Analyse nach einem der Ansprüche 8 bis 10, **dadurch gekennzeichnet, dass** der Deckel ferner Düsen umfasst, die an Flakons für die Abspritzung von Flüssigkeiten für die Reinigung und die Dekontaminierung des Geräts angeschlossen sind.

12. Automat für die biologische Analyse nach Anspruch 6, **dadurch gekennzeichnet, dass** er ferner eine mechanische Translationsvorrichtung umfasst, mit der das Biochips (2) tragende Gleitstück (4) an den Rand gezogen und in seine Ausgangsposition zurückversetzt werden kann.

13. Automat für die biologische Analyse nach Anspruch 6 oder Anspruch 12, **dadurch gekennzeichnet, dass** er ferner eine mechanische Translationsvorrichtung umfasst, mit der der Reaktor (1) an den Rand gezogen und in seine Ausgangsposition zurückversetzt werden kann.
